# EUROPEAN PATENT SPECIFICATION

(11) **EP 3 796 090 B1**
(45) Date of publication and mention of the grant of the patent: **05.03.2025**
(21) Application number: 19803432.4
(22) Date of filing: 14.05.2019
(51) Int. Cl.: G03G 9/087, G03G 9/08, G03G 9/097

(54) **TONER FOR DEVELOPING ELECTROSTATIC CHARGE IMAGE AND METHOD OF MANUFACTURING THEREOF**
TONER ZUR ELEKTROSTATISCHEN BILDAUFLADUNG UND VERFAHREN ZUR HERSTELLUNG DES TONERS
TONER POUR DÉVELOPPEMENT D'IMAGE DE CHARGE ÉLECTROSTATIQUE ET PROCÉDÉ DE FABRICATION DE TONER

(30) Priority: 17.05.2018 JP 2018095625
(43) Date of publication of application: 24.03.2021
(73) Proprietor: Sakata INX Corporation, Osaka-shi, Osaka 550-0002 (JP)
(72) Inventor: KUSAMIYA, Motoyuki, Osaka-shi, Osaka 550-0002 (JP); OGURA, Kenji, Osaka-shi, Osaka 550-0002 (JP)
(74) Representative: KIPA AB
(86) International application number: PCT/JP2019/019148
(87) International publication number: WO 2019/221127

(56) References cited:
- JP-A- 2002 131 969
- JP-A- 2005 017 442
- JP-A- 2006 058 652
- JP-A- 2017 049 457
- US-A1- 2002 042 013
- US-A1- 2004 096 766
- US-A1- 2004 152 813
- US-A1- 2004 265 718

## Description

### TECHNICAL FIELD

The present invention relates to a toner for developing an electrostatic charge image and a method of manufacturing thereof. More specifically, the present invention relates to a toner for developing an electrostatic charge image which exhibits an excellent storage stability and can be fixed at a low temperature, and a method of manufacturing thereof.

### BACKGROUND ART

Conventionally, there has been demands for lowering a fixing temperature and shortening a standby time in an electrophotographic printer and a copier from the viewpoint of energy saving. Accordingly, a toner used has been required to have an excellent low-temperature fixing performance. If a melting point of resin is lowered in order to improve the low-temperature fixing performance, a glass transition temperature of a toner is lowered, which deteriorates a storage stability. Patent Document 1 proposes a method of preventing a decrease in a glass transition point by performing heat treatment during manufacturing of a toner. Furthermore, Patent Document 2 proposes a method of achieving both a low-temperature fixability and a storage stability by forming a core-shell structure after pulverizing and classifying a toner.

### PRIOR ART DOCUMENT

### Patent Document

Patent Document 1: JP 2010-139752 A
Patent Document 2: JP 2015-157715 A

### SUMMARY OF THE INVENTION

Therefore, in order to obtain a low-temperature fixability, use of a crystalline resin having a sharp melt property has been considered. However, especially for a toner obtained through steps of kneading, and then cooling for solidification, followed by pulverization and classification, a glass transition temperature is significantly lowered, and a storage stability easily deteriorates, such as when a non-crystalline resin and a crystalline resin are polyesters, in melt-kneading the non-crystalline resin and the crystalline resin. When dispersibility of the non-crystalline resin and the crystalline resin decreases, an electric charge amount of the toner easily becomes non-uniform. Furthermore, when the glass transition temperature is lowered, the toner easily causes blocking during storage. Moreover, the methods described in Patent Documents 1 and 2 require a new equipment, easily reduce productivity, and increase costs. Therefore, there has been a demand for a toner which can utilize existing equipment and achieves both a low-temperature fixability and a storage stability.

The present invention has been made in view of such conventional problems, and it is an object of the present invention to provide a toner for developing an electrostatic charge image which can utilize existing equipment and achieve both a low-temperature fixability and a storage stability, and a method of manufacturing thereof.

As a result of intensive studies to solve the above-described problems, the present inventors have found that a dicarboxylic acid monomer molecule constituting a crystalline polyester resin affects a low-temperature fixability and a storage stability. Then, the present inventors have found that the above-described problems can be solved by comprising an alicyclic dibasic acid, a terephthalic acid, and an isophthalic acid as acid components and compounding a predetermined amount of a crystalline polyester resin in a toner particle, and completed the present invention.

The toner for developing an electrostatic charge image according to an aspect of the present invention which solves the above-described problems comprises a toner particle and an external additive, the toner particle comprising a binder resin containing a crystalline polyester resin, a colorant, and a release agent, the crystalline polyester resin comprising an alicyclic dibasic acid, a terephthalic acid, and an isophthalic acid as acid components and being contained in the toner particle in an amount of 4 to 8% by mass.

The method of manufacturing a toner for developing an electrostatic charge image according to an aspect of the present invention which solves the above-described problems is a method of manufacturing the above-described toner for developing an electrostatic charge image, which is a method of manufacturing a toner for developing an electrostatic charge image, including steps of manufacturing by melt-kneading, and then cooling for solidification, followed by pulverization and classification and the addition of an external additive.

According to such a configuration, a toner for developing an electrostatic charge image to be obtained can achieve both a low-temperature fixability and a storage stability. Furthermore, the toner for developing an electrostatic charge image can be manufactured by using the same equipment as the existing equipment. Therefore, according to the manufacturing method, the cost of the toner can be prevented from increasing.

### EMBODIMENT FOR CARRYING OUT THE INVENTION

### <Toner for developing electrostatic charge image>

The toner for developing an electrostatic charge image (hereinafter, also referred to as the toner) according to an embodiment of the present invention comprises a toner particle and an external additive. The toner particle comprises a binder resin containing a crystalline polyester resin, a colorant, and a release agent. The crystalline polyester resin comprises an alicyclic dibasic acid, a terephthalic acid, and an isophthalic acid as acid components, and is contained in the toner particle in an amount of 4 to 8% by mass. Furthermore, the toner is used for an image forming method in an electrophotographic system and may be a two-component toner used together with a carrier or may be a one-component toner used without a carrier. Each component will be described below.

### (Toner particle)

The toner particle comprises a binder resin containing a crystalline polyester resin, a colorant, and a release agent.

### • Binder resin

The binder resin is compounded to disperse the colorant comprised in the toner and to melt and then solidify it on a surface of a recording medium by heat of a fixing roller, and fix it on the surface of the recording medium, in a fixing process during printing.

As the binder resin, the crystalline polyester resin of this embodiment and a binder resin other than the crystalline polyester resin of this embodiment are used in combination.

Since the crystalline polyester resin of this embodiment comprises an alicyclic dibasic acid, a terephthalic acid, and an isophthalic acid as acid components, it can improve both a low-temperature fixability and a storage stability of a toner.

Examples of the alicyclic dibasic acid include 1,4-cyclohexanedicarboxylic acid, 1,3-cyclohexanedicarboxylic acid, 1,2-cyclohexanedicarboxylic acid, 4-methyl-1,2-cyclohexanedicarboxylic acid, dimer acid, and the like. Among them, 1,4-cyclohexanedicarboxylic acid is preferable since it easily adjusts the softening point and has a good fixability.

The alicyclic dibasic acid is comprised in the crystalline polyester resin in an amount of preferably 3% by mass or more, more preferably 5% by mass or more. Furthermore, the alicyclic dibasic acid is comprised in the crystalline polyester resin in an amount of preferably 50% by mass or less, more preferably 40% by mass or less. When the content of the alicyclic dibasic acid is within the above-described ranges, a toner to be obtained has excellent low-temperature fixability and storage stability.

The terephthalic acid and the isophthalic acid are comprised in the crystalline polyester resin in an amount of preferably 20% by mass or more, more preferably 25% by mass or more. Furthermore, the terephthalic acid and the terephthalic acid are comprised in the crystalline polyester resin in an amount of preferably 70% by mass or less, more preferably 60% by mass or less. When the content of the terephthalic acid and the isophthalic acid is within the above-described ranges, a toner to be obtained has an excellent storage stability.

In this regard, other acid components can be used as long as the performance does not deteriorate.

A conventionally known alcohol component can be utilized as an alcohol component for the crystalline polyester resin of this embodiment. The alcohol component is preferably a C4-C12 aliphatic diol, more preferably 1,2-butanediol, 1,3-butanediol, 1,4-butanediol, 1,5-pentanediol, 1,6-hexanediol, 3-methyl-1,5-pentanediol, 1,9-nonanediol, 2-methyloctanediol, 1,10-decanediol, and 2-butyl-2-ethyl-1,3-propanediol, further preferably 1,4-butanediol, from the viewpoint of improving both a low-temperature fixability and a storage stability of a toner.

A weight-average molecular weight of the crystalline polyester resin is preferably 20,000 or more. Furthermore, the weight-average molecular weight of the crystalline polyester resin is preferably 40,000 or less. When the weight-average molecular weight is less than 20,000, a storage stability of a toner easily deteriorates. On the other hand, when the weight-average molecular weight exceeds 40,000, a low-temperature fixability of the toner easily deteriorates.

A content of the crystalline polyester resin may be 4% by mass or more in the binder resin. Furthermore, the content of the crystalline polyester resin may be 8% by mass or less in the binder resin. When the content is less than 4% by mass, a toner has a poor low-temperature fixability. On the other hand, when the content exceeds 8 mass %, the toner has a poor storage stability.

A melting point of the crystalline polyester resin is not particularly limited. By way of an example, the melting point is preferably 95°C or higher. Furthermore, the melting point is preferably 100°C or lower. When the melting point is within the above-described ranges, a toner has a good fixability. Besides, the melting point herein can be calculated by measuring a melting temperature in a thermal analysis using a differential scanning calorimeter. The binder resin is not particularly limited.

A method of manufacturing a crystalline polyester resin is not particularly limited, and the crystalline polyester resin can be manufactured by a general polyester polymerization method in which an acid component and an alcohol component are reacted, and examples of the method include direct polycondensation, transesterification, and the like.

The crystalline polyester resin can be manufactured in a range of a polymerization temperature at 180°C to 230°C, where a pressure in a reaction system is reduced and a reaction is performed while removing water and alcohol generated during condensation, as necessary. When a monomer is insoluble or incompatible under the reaction temperature, a solvent having a high boiling point may be added and dissolved as a solubilizer. A polycondensation reaction is performed while distilling off a solubilizing solvent. When a poorly compatible monomer is present in a copolymerization reaction, it is preferable that the poorly compatible monomer is condensed with acid or alcohol to be polycondensed therewith in advance, and then the condensed monomer is polycondensed with a main component.

Examples of a catalyst that can be used for manufacturing a crystalline polyester resin include alkali metal compounds such as sodium and lithium; alkaline earth metal compounds such as magnesium and calcium; metal compounds such as zinc, manganese, antimony, titanium, tin, zirconium, and germanium; phosphite compounds, phosphoric acid compounds, amine compounds, and the like, and specifically include the following compounds.

For example, examples of the catalyst specifically include compounds such as sodium acetate, sodium carbonate, lithium acetate, lithium carbonate, calcium acetate, calcium stearate, magnesium acetate, zinc acetate, zinc stearate, zinc naphthenate, zinc chloride, manganese acetate, manganese naphthenate, titanium tetraethoxide, titanium tetrapropoxide, titanium tetraisopropoxide, titanium tetrabutoxide, antimony trioxide, triphenylantimony, tributylantimony, tin formate, tin oxalate, tetraphenyltin, dibutyltin dichloride, dibutyltin oxide, diphenyltin oxide, zirconium tetrabutoxide, zirconium naphthenate, zirconyl carbonate, zirconyl acetate, zirconyl stearate, zirconyl octylate, germanium oxide, triphenylphosphite, tris(2,4-t-butylphenyl)phosphite, ethyltriphenylphosphonium bromide, triethylamine, and triphenylamine.

A binder resin that can be used in combination with the crystalline polyester resin of this embodiment is not particularly limited. By way of an example, the binder resin may be styrene-based copolymers such as polystyrene, a styrene-methyl acrylate copolymer, and a styrene-acrylonitrile copolymer, and resin materials such as a polyester resin and an epoxy resin other than the crystalline polyester resin of this embodiment. These binder resins may be used in combination. Among them, polyester is preferred as a binder resin used in combination from the viewpoint that a toner having easy coloring and a clear color can be obtained.

The binder resin of this embodiment preferably comprises amorphous resins among the above-described resin materials. Furthermore, the amorphous resin preferably has a weight-average molecular weight of 4,000 to 150,000 and a softening point of 95°C to 125°C. The weight-average molecular weight is preferably 4,000 or more, more preferably 5,000 or more. Furthermore, the weight-average molecular weight is preferably 150,000 or less, more preferably 12,000 or less. The softening point is preferably 90°C or higher, more preferably 95°C or higher. Furthermore, the softening point is preferably 125°C or lower, more preferably 120°C or lower. When the weight-average molecular weight and the softening point are within the above-described ranges, a toner to be obtained exhibits excellent low-temperature fixability and storage stability. Besides, in this embodiment, the weight-average molecular weight can be calculated by performing measurement by, for example, gel permeation chromatography (GPC) in terms of polystyrene. Examples of a device for measuring a weight-average molecular weight in terms of polystyrene by GPC include, for example, Water 2690 (manufactured by Waters Corporation), PLgel 5 µL MIXED-D (manufactured by Polymer Laboratories) as a column, and the like. In addition, the softening point can be measured according to ASTM E28-92.

A content of the binder resin other than the crystalline polyester resins of the present embodiment is not particularly limited. By way of an example, the content of the binder resin is preferably 75% by mass or more in a toner. Furthermore, the content of the binder resin is preferably 85% by mass or less in the toner. When the content of the binder resin is within the above-described ranges, a toner to be obtained is easy to properly disperses a colorant and fix on a recording medium.

### • Colorant

A colorant is compounded to give a toner a tinting strength. The colorant is not particularly limited. By way of an example, the colorant is a colorant such as a magnetic powder that exhibits a black color such as carbon black, a colorant that exhibits a cyan color such as copper phthalocyanine, methylene blue, and Victoria blue, a colorant that exhibits a magenta color such as a rhodamine dye, dimethylquinacridone, dichloroquinacridone, and carmine red, a colorant that exhibits a yellow color such as benzidine yellow, chrome yellow, naphthol yellow, and disazo yellow, or the like. The colorant may be used in combination.

A content of the colorant is not particularly limited. As a way of an example, the content of the colorant used is preferably 0.1 to 30 parts by mass based on 100 parts by mass of a binder resin in a toner. Furthermore, various masterbatches, in which a high-concentration pigment is dispersed in the resin in advance, are commercially available, and thus they may be purchased and used as the colorant. In this case, an amount used can be determined in consideration of a concentration of a pigment contained in the masterbatch so that the concentration of the pigment contained in the toner falls within the above-described range.

### • Release agent

A release agent is not particularly limited, and various known wax can be used. By way of an example, examples of the wax include a polyolefin wax such as a polyethylene wax and a polypropylene wax, a branched hydrocarbon wax such as a microcrystalline wax, a long-chain hydrocarbon-based wax such as a paraffin wax and a Sazole wax, a dialkyl ketone-based wax such as distearyl ketone, an ester-based wax such as a carnauba wax, a montan wax, behenic acid behenate, trimethylolpropane tribehenate, pentaerythritol tetrabehenate, pentaerythritol diacetate dibehenate, glycerin tribehenate, 1,18-octadecanediol distearate, tristearyl trimellitate, and distearyl maleate, an amide-based wax such as ethylenediamine behenylamide and tristearylamide trimellitate, and the like. The release agent may be used in combination. Among these, an ester-based wax and a hydrocarbon wax are preferable as the release agent.

A content of the release agent is not particularly limited. By way of an example, the content of the release agent can be usually in the range of 1 to 30 parts by mass, preferably in the range of 5 to 20 parts by mass, based on 100 parts by mass of a binder resin. The content of the release agent in a toner particle is preferably in the range of 3 to 15% by mass. When the content of the release agent is within the above-described ranges, a toner to be obtained can have a good release property between a fixing roller and a printing surface in a fixing process during printing. Furthermore, in the toner, the release agent is less likely to exude, and charging failure and filming, etc. are less likely to occur.

### • Other components

The toner particle is, for example, a charge adjusting agent, etc. besides the above-described components. The charge adjusting agent is appropriately compounded to adjust a charge amount of a toner.

A charge adjusting agent is not particularly limited. By way of an example, the charge adjusting agent is a resin type charge adjusting agent such as a metal complex such as nigrosine, a basic dye, and a monoazo dye, a salt or complex of a carboxylic acid such as a salicylic acid and a dicarboxylic acid with a metal such as chromium, zirconium, and aluminum, a metal salt of an organic dye, a naphthenic acid, or a higher fatty acid, an alkoxylated amine, a quaternary ammonium salt compound, and an aromatic polycondensate, and the like. The charge adjusting agent may be used in combination. Among them, a toner preferably comprises a resin type charge adjusting agent from the viewpoint of charging stability.

A content of the charge adjusting agent is not particularly limited. By way of an example, the content of the charge adjusting agent may not be contained in a toner particle, but is preferably 0.5% by mass or more. Furthermore, the content of the charge adjusting agent is preferably 8% by mass or less in the toner particle. When the content of the charge adjusting agent is within the above-described ranges, a toner to be obtained has a more excellent chargeability.

### (External additive)

An external additive is compounded to improve printability, such as to be attached to a surface of a toner particle to improve charging characteristics of the toner particle, and to exist in a state of being separated from the toner particle to improve fluidity of the toner.

An external additive is not particularly limited. By way of an example, the external additive is a negatively charged lubricant particle, a positively charged lubricant particle, an inorganic oxide particle, or the like. The external additive may be used in combination. The external additive is appropriately selected and used according to the model and purpose.

The positively charged lubricant particle is a lubricant particle that is positively charged by frictional charging between a carrier and a charging blade. Such a lubricant particle is known, and a fatty acid metal salt particle is preferably exemplified. Examples of such a metal salt of a fatty acid preferably include zinc stearate, aluminum stearate, calcium stearate, magnesium stearate, zinc laurate, zinc myristate, zinc palmitate, zinc oleate, and the like. Among them, zinc stearate and magnesium stearate are more preferable. The positively charged lubricant particle may be of a single type or a combination of two or more types.

The negatively charged lubricant particle is a lubricant particle that is negatively charged by frictional charging between a carrier and a charging blade. Such a lubricant particle is known, and polytetrafluoroethylene (PTFE), silicone, boron nitride, polymethylmethacrylate (PMMA), and polyvinylidene fluoride are preferably exemplified, and among them, boron nitride and polytetrafluoroethylene (PTFE) are more preferably exemplified. The negatively chargeable lubricant particle may be of a single type or may be a combination of two or more types.

An inorganic oxide particle is not particularly limited. By way of an example, the inorganic oxide particle is silica, alumina, titania, zirconia, zinc oxide, chromium oxide, cerium oxide, antimony oxide, tungsten oxide, tin oxide, tellurium oxide, manganese oxide, boron oxide, or the like. The inorganic oxide particle may be used in combination. Among them, silica and titania are preferable as the inorganic oxide particle from the viewpoints of an excellent fluidity and an excellent chargeability of a toner.

A surface of the inorganic oxide particle is preferably hydrophobized. A hydrophobizing method is not particularly limited. By way of an example, the hydrophobizing method is a method of bringing a conventionally known hydrophobizing agent into contact with the surface of the inorganic oxide particle before hydrophobization to chemically bond or attach a hydrophobic functional group or component to the surface of the inorganic oxide particle. The hydrophobizing agent for hydrophobizing the inorganic oxide particle is not particularly limited. By way of an example, the hydrophobizing agent is octyltriethoxysilane, polydimethylsiloxane, dimethyldichlorosilane, hexamethyldisilazane, or the like. The hydrophobizing agent may be used in combination.

An addition amount of the external additive of the present embodiment (a total addition amount if a plurality of external additives are used) is preferably in the range of 0.05 to 5 parts by mass, more preferably in the range of 0.1 to 3 parts by mass, based on 100 parts by mass of a toner. When a content of the external additive is within the above-described ranges, a toner to be obtained has good fluidity, chargeability, cleaning property, etc.

As such, the toner of this embodiment comprises a crystalline polyester, and the crystalline polyester comprises an alicyclic dibasic acid, a terephthalic acid, and an isophthalic acid as acid components and is contained in the toner particle in an amount of 4 to 8% by mass, as described above. Such a toner can achieve both excellent low-temperature fixability and storage stability.

### <Method of manufacturing toner for developing electrostatic charge image>

The method of manufacturing a toner for developing an electrostatic charge image according to an embodiment of the present invention (hereinafter, also referred to as a method of manufacturing a toner) is a manufacturing method for manufacturing the toner for developing an electrostatic charge image described above and includes steps of kneading, and then cooling for solidification, followed by pulverization and classification. In this regard, each of these steps is a step being adopted in any conventionally known method of manufacturing a toner. That is, in the method of manufacturing a toner according to this embodiment, the toner can be prepared by a conventionally known method using a conventionally known manufacturing device.

More specifically, first, in the kneading step, each component of the toner particle described above is melt-kneaded to prepare a kneaded product. For mixing each component, various conventionally known mixing devices (for example, a double cone mixer, a V type mixer, a drum type mixer, a super mixer, a Henschel mixer, a nauta mixer, and a Mechano Hybrid (manufactured by Nippon Coke & Engineering Co., Ltd.), and the like) can be used. A batch kneader such as a pressure kneader and a Banbury mixer or a continuous kneader can be used for melt-kneading, and a single-screw or twin-screw extruder is mainly used because of its superiority of continuous production possibility. Examples of the extruder include, for example, a KTK type twin-screw extruder (manufactured by Kobe Steel, Ltd.), a TEM type twin-screw extruder (manufactured by Toshiba Machine Co., Ltd.), a PCM kneader (manufactured by Ikegai Corp.), a twin-screw extruder (manufactured by KCK Engineering Co., Ltd.), a co-kneader (manufactured by Buss Co., Ltd.), Kneadex (manufactured by Nippon Coke & Engineering Co., Ltd.), and the like. In this regard, as a toner material, a masterbatch comprising the above-described binder resin and colorant may be used.

Then, the kneaded product is cooled, and next the cooled kneaded product is pulverized (for example, after roughly pulverized by a pulverizer such as a crusher, a hammer mill, and a feather mill, further finely pulverized with, for example, Kryptron System (manufactured by Kawasaki Heavy Industries, Ltd.), Super Rotor (manufactured by Nisshin Engineering Inc.), Turbo Mill (manufactured by Freund-turbo Corporation), and a fine pulverizer in an air jet manner). A powder (a pulverized material) obtained in the pulverizing step is classified (for example, classified using a classifier or a sieving machine such as Elbow-Jet in a inertial classification manner (manufactured by Nittetsu Mining CO., Ltd.), Turboplex in a centrifugal classification manner (manufactured by Hosokawa Micron Corporation), TSP Separator (manufactured by Hosokawa Micron Corporation), and FACULTY (manufactured by Hosokawa Micron Corporation). A volume median diameter (D50) of a toner particle after pulverization and classification is preferably 4 to 10 µm. Besides, in this embodiment, the volume median diameter (D50) is also referred to as a volume-based median diameter and indicates a value that is 50% each of a total volume of particles having a diameter smaller than this value and a total volume of particles having a diameter larger than this value in a whole total volume. The volume median diameter (D50) can be calculated by measuring a particle size distribution. Examples of a particle size distribution measuring device can include "Multisizer 3" manufactured by Beckman Coulter, Inc.

As such, the method of manufacturing the toner according to the present embodiment does not require special equipment, and the toner can be manufactured using the similar equipment as the existing equipment. As described above, a toner to be obtained can achieve both excellent low-temperature fixability and storage stability. Therefore, according to this manufacturing method, the cost of the toner can be prevented from increasing.

### EXAMPLE

Hereinafter, the present invention will be described more specifically by way of examples. The present invention is in no way limited to these examples. Unless otherwise specified, "%" means "% by mass", and "part(s)" means "part(s) by mass".

Raw materials and preparation methods used are shown below.

### <Binder resin>

### • Crystalline polyester resin

Crystalline polyester resin 1: Polyester of a cyclohexanedicarboxylic acid, an isophthalic acid, and a terephthalic acid, with 1,4-butanediol. Weight-average molecular weight: 30,000, melting point: 96°C
Crystalline polyester resin 2: Polyester of a sebacic acid with 1,6-hexanediol. Weight-average molecular weight: 2,600, melting point: 66°C
Crystalline polyester resin 3: Polyester of a sebacic acid with 1,6-hexanediol. Weight-average molecular weight: 5,000, melting point 67°C
Crystalline polyester resin 4: Polyester of a sebacic acid with 1,6-hexanediol. Weight-average molecular weight: 10,000, melting point: 69°C

### • Non-crystalline binder resin used in combination

Non-crystalline binder resin 1: Commercially available non-crystalline polyester resin (Tg: 64°C, molecular weight: 5,500)
Non-crystalline binder resin 2: Commercially available non-crystalline polyester resin (Tg: 65°C, molecular weight: 110,000)

### <Charge adjusting agent>

Product name: Copy Charge N5P-01 (manufactured by Clariant Chemicals)

### <Colorant>

Carmine 6B pigment masterbatch (pigment content: 40% by mass, resin: non-crystalline polyester resin)
Dimethylquinacridone pigment masterbatch (pigment content: 45% by mass, resin: non-crystalline polyester resin)

### <Release agent>

Release agent 1: Fatty acid ester wax (melting point: 69°C)
Release agent 2: Hydrocarbon wax (melting point: 98°C)

### <External additive>

External additive 1: Silica particle surface-treated with silicone oil (particle size: 28 nm)
External additive 2: Silica particle surface-treated with dimethyldichlorosilane (particle size: 12 nm)
External additive 3: Silica particle surface-treated with alkylsilane (particle size: 115 nm)
External additive 4: Titanium oxide particle surface-treated with alkylsilane (particle size: 15 nm)

### <Examples 1-2, Comparative examples 1-6>

### (Preparation of toner)

According to a mass ratio (% by mass) shown in Table 1 below, a crystalline polyester resin, a non-crystalline binder 1, a non-crystalline binder 2, a release agent 1, a release agent 2, a charge control agent, a Carmine 6B pigment masterbatch and a dimethylquinacridone pigment masterbatch were mixed by a Henschel mixer and then melt-kneaded using a biaxial kneader. The obtained kneaded product was roughly pulverized with a Rotoplex, then finely pulverized with a jet mill, and classified with an air classifier to obtain a toner particle having a volume average diameter of 6.5 µm. External additives 1 to 4 shown in Table 1 were added to the toner particle based on 100 parts by mass of the toner particle, and the mixture was stirred with a Henschel mixer for 10 minutes to obtain a toner.

**Table 1**

| | | Example | | Comparative example | | | | | |
|---|---|---|---|---|---|---|---|---|---|
| | | 1 | 2 | 1 | 2 | 3 | 4 | 5 | 6 |
| | Non-crystalline binder resin 1 | 50.6 | 49.1 | 54.2 | 47 | 50.6 | 49.1 | 50.6 | 49.1 |
| | Non-crystalline binder resin 2 | 20.2 | 19.7 | 21.6 | 18.8 | 20.2 | 19.7 | 20.2 | 19.7 |
| | Carmine 6B pigment masterbatch | 9 | 9 | 9 | 9 | 9 | 9 | 9 | 9 |
| | Dimethylquinacridone pigment masterbatch | 7.2 | 7.2 | 7.2 | 7.2 | 7.2 | 7.2 | 7.2 | 7.2 |
| | Release agent 1 (Fatty acid ester wax) | 5 | 5 | 5 | 5 | 5 | 5 | 5 | 5 |
| Toner particle | Release agent 2 (Hydrocarbon wax) | 2 | 2 | 2 | 2 | 2 | 2 | 2 | 2 |
| | Charge control agent | 1 | 1 | 1 | 1 | 1 | 1 | 1 | 1 |
| | Crystalline polyester resin 1 | 5 | 7 | - | 10 | - | - | - | - |
| | Crystalline polyester resin 2 | - | - | - | - | 5 | - | - | - |
| | Crystalline polyester resin 3 | - | - | - | - | - | 7 | - | - |
| | Crystalline polyester resin 4 | - | - | - | - | - | - | 5 | 7 |
| | Total | 100 | 100 | 100 | 100 | 100 | 100 | 100 | 100 |
| Toner | % by mass based on 100 parts by mass of toner particle | | | | | | | | |
| | External additive 1 | 1 | 1 | 1 | 1 | 1 | 1 | 1 | 1 |
| | External additive 2 | 0.7 | 0.7 | 0.7 | 0.7 | 0.7 | 0.7 | 0.7 | 0.7 |
| | External additive 3 | 2 | 2 | 2 | 2 | 2 | 2 | 2 | 2 |
| | External additive 4 | 0.5 | 0.5 | 0.5 | 0.5 | 0.5 | 0.5 | 0.5 | 0.5 |
| Evaluation Result | Fixing rate (N/N environment) | ○ | ○ | × | ○ | ○ | ○ | ○ | ○ |
| | Fixing rate (L/L environment) | ○ | ○ | × | ○ | △ | △ | × | △ |
| | Paper end fixability (N/N environment) | ○ | ○ | × | ○ | ○ | ○ | ○ | ○ |
| | Paper end fixability (L/L environment) | ○ | ○ | × | ○ | △ | ○ | × | △ |
| | release property | ○ | ○ | ○ | ○ | ○ | ○ | ○ | ○ |
| | Storage stability (50°C, 8h) | ○ | ○ | ○ | △ | ○ | ○ | ○ | ○ |
| | Storage stability (55°C, 8h) | ○ | ○ | ○ | × | × | × | △ | × |

With respect to the toners of Examples and Comparative examples obtained above, printed matters were prepared under the following conditions to evaluate fixability, release property, and storage stability. The results are shown in Table 1.

### <Evaluation on fixing rate (N/N environment)>

A non-magnetic two-component negative charging printer for evaluation is used to print a solid image on a plain paper (80 g/m²) under an environment of temperature at 25°C and humidity of 50%, and a Gakushin-type fastness to rubbing tester (NR-100 manufactured by Daiei Kagaku Seiki Mfg. Co., Ltd.) was used to perform a friction test on the above-described solid image under the following conditions. Image densities of the images before and after rubbing were measured using a reflection densitometer (manufactured by Macbeth) to calculate a fixing ratio by the following formula.
Friction surface: Non-woven fabric (product name: COTTON PADS manufactured by Haniron Co., Ltd.)
Load: 500 g
Number of reciprocating: 5 times
Horizontal reciprocating distance: 10 cm Fixing rate (%): (image density after rubbing/image density before rubbing) × 100
○: Fixing rate was 85% or more.
△: Fixing rate was 80% or more and less than 85%.
×: Fixing rate was less than 80%.

### <Evaluation on fixing rate (L/L environment)>

A non-magnetic two-component negative charging type printer for evaluation was used to print a solid image on a plain paper (80 g/m²) under an environment of temperature at 10°C and humidity of 20%, and a Gakushin-type fastness to rubbing tester (NR-100 manufactured by Daiei Kagaku Seiki Mfg. Co., Ltd.) was used to perform a friction test on the above-described solid image under the following conditions. Image densities of the images before and after rubbing were measured using a reflection densitometer (manufactured by Macbeth) to calculate fixing ratio by the following formula.
Friction surface: Non-woven fabric (product name COTTON PADS manufactured by Haniron Co., Ltd.)
Load: 500 g
Number of reciprocating: 5 times
Horizontal reciprocating distance: 10 cm Fixing rate (%): (image density after rubbing/image density before rubbing) × 100
○: Fixing rate was 85% or more.
Δ : Fixing rate was 80% or more and less than 85%.
×: Fixing rate was less than 80%.

### <Evaluation on paper end fixability (N/N environment)>

A non-magnetic two-component negative charging printer for evaluation was used to print 10 continuous solid images with 100% coverage under an environment of temperature at 25°C and humidity of 50%.
○: All parts including the center and the end of the paper were not peeled off by rubbing the image.
Δ: Only the end of the paper was peeled off by rubbing the image.
×: Both the center and the end of the paper were peeled off by rubbing the image.

### <Evaluation on paper end fixability (L/L environment)>

A non-magnetic two-component negative charging printer for evaluation was used to print 10 continuous solid images with 100% coverage under an environment of temperature at 10°C and humidity of 20%.
○: All parts including the center and the end of the paper were not peeled off by rubbing the image.
Δ: Only the end of the paper was peeled off by rubbing the image.
×: Both the center and the end of the paper were peeled off by rubbing the image.

### <Evaluation on release property>

A non-magnetic two-component negative charging printer for evaluation was used to print a solid image with 100% coverage on a plain paper (64 g/m²) to evaluate occurrence of winding around a fixing device, peeling claw on a fixing roller, and offset staining.
○: Winding around a fixing device, peeling claw on a fixing roller, and offset staining did not occur.
×: Winding around a fixing device, peeling claw on a fixing roller, and offset staining occurred.

### <Storage stability at 50°C/8h>

A 20g of toner is placed in a sealed plastic container and stored at 50°C for 8 hours and then evaluated with a powder tester (manufactured by Hosokawa Micron Corporation). Sieve A (opening: 355 µm), sieve B (opening: 250 µm), and sieve C (opening: 150 µm) were stacked in order from the upside, and a 20 g of toner is put into the sieve A and vibrated at an amplitude of 1 mm for 30 seconds to measure a weight of the remaining toner.

Aggregation %: Aggregation calculated by the following equation is evaluated: (residual quantity of toner on sieve A (g)+residual quantity of toner on sieve B (g)×0.6+residual quantity of toner on sieve A (g)×0.2)/20×100
○: Aggregation was less than 10%.
Δ: Aggregation was 10% or more and less than 20%.
×: Aggregation was 20% or more.

### <Storage stability at 55°C/8h>

A 20g of toner is placed in a sealed plastic container and stored at 55°C for 8 hours and then evaluated with a powder tester (manufactured by Hosokawa Micron Corporation). Sieve A (opening: 355 µm), sieve B (opening: 250 µm), and sieve C (opening: 150 µm) were stacked in order from the upside, and a 20 g of toner is put into the sieve A and vibrated at an amplitude of 1 mm for 30 seconds to measure a weight of the remaining toner.

Aggregation %: Aggregation calculated by the following equation is evaluated: (residual quantity of toner on sieve A (g)+residual quantity of toner on sieve B (g)×0.6+residual quantity of toner on sieve A (g)×0.2)/20×100
○: Aggregation was less than 10%.
Δ: Aggregation was 10% or more and less than 20%.
×: Aggregation was 20% or more.

As shown in Table 1, the toners of Examples 1 and 2 were excellent in fixability, offset, and storage stability. On the other hand, the toner of Comparative example 1 comprising no crystalline polyester resin was inferior in fixing ratio and paper end fixability. The toner of Comparative example 2 comprising a large amount of crystalline polyester was inferior in storage stability. The toners of Comparative examples 3 to 6 comprising a crystalline polyester resin comprising acid components other than the present invention were inferior in at least one of fixing rate, paper end fixability, and storage stability.

## Claims

1. A toner for developing an electrostatic charge image, comprising:
a toner particle and an external additive, the toner particle comprising:
a binder resin containing a crystalline polyester resin, a colorant, and a release agent, the crystalline polyester resin comprising:
an alicyclic dibasic acid, a terephthalic acid, and an isophthalic acid as acid components, and the crystalline polyester resin
being contained in the toner particle in an amount of 4 to 8% by mass.

2. The toner for developing an electrostatic charge image of claim 1, wherein the crystalline polyester resin has a weight-average molecular weight of 20,000 to 40,000 as calculated by performing measurement by for example gel permeation chromatography (GPC) and a melting point of 95°C to 100°C, as determined by thermal analysis using a differential scanning calorimeter.

3. The toner for developing an electrostatic charge image of claim 1 or 2, wherein the crystalline polyester resin comprises a C4-C12 aliphatic diol as an alcohol component.

4. The toner for developing an electrostatic charge image of any one of claim 1 to 3, the crystalline polyester resin comprises a cyclohexanedicarboxylic acid, a terephthalic acid, and an isophthalic acid as acid components, and 1,4-butanediol as an alcohol component.

5. The toner for developing an electrostatic charge image of any one of claim 1 to 4, wherein the binder resin comprises a non-crystalline polyester resin, the non-crystalline polyester resin having a weight-average molecular weight of 4,000 to 150,000 as calculated by performing measurement by for example gel permeation chromatography (GPC) and a softening point of 90°C to 125°C, as measured according to ASTM E28-92.

6. The toner for developing an electrostatic charge image of any one of claim 1 to 5, further comprising a resin type charge adjusting agent.

7. A method of manufacturing a toner for developing an electrostatic charge image of any one of claim 1 to 6, comprising steps of manufacturing by melt-kneading the components of the toner, and then cooling for solidification, followed by pulverization and classification and the addition of an external additive.

## Patentansprüche

1. Ein Toner zur Entwicklung eines elektrostatischen Ladungsbildes mit einem Tonerpartikel und einem externen Additiv, wobei das Tonerpartikel ein Bindemittelharz aufweist,
das ein kristallines Polyesterharz, einen Farbstoff und ein Trennmittel enthält, wobei das kristalline Polyesterharz Folgendes umfasst:
eine alicyclische Dicarbonsäure, eine Terephthalsäure und eine Isophthalsäure als Säurekomponenten. Das kristalline Polyesterharz im Tonerpartikel ist in einer Menge von 4 bis 8 Gewichtsprozent enthalten.

2. Toner zur Entwicklung eines elektrostatischen Ladungsbildes nach Anspruch 1, wobei das kristalline Polyesterharz ein durchschnittliches Molekulargewicht von 20.000 bis 40.000, gemessen beispielsweise durch Gelpermeationschromatographie (GPC), und einen Schmelzpunkt von 95 °C bis 100 °C hat, bestimmt durch thermische Analyse mit einem Differenzscanningkalorimeter.

3. Toner zur Entwicklung eines elektrostatischen Ladungsbildes nach Anspruch 1 oder 2, wobei das kristalline Polyesterharz ein C4-C12 aliphatisches Diol als Alkoholkomponente aufweist.

4. Toner zur Entwicklung eines elektrostatischen Ladungsbildes nach einem der Ansprüche 1 bis 3, wobei das kristalline Polyesterharz eine Cyclohexandicarbonsäure, eine Terephthalsäure und eine Isophthalsäure als Säurekomponenten sowie 1,4-Butandiol als Alkoholkomponente beinhaltet.

5. Toner zur Entwicklung eines elektrostatischen Ladungsbildes nach einem der Ansprüche 1 bis 4, wobei das Bindemittelharz ein amorphes Polyesterharz mit einem durchschnittlichen Molekulargewicht von 4.000 bis 150.000 aufweist, gemessen beispielsweise durch Gelpermeationschromatographie (GPC), und einen Erweichungspunkt von 90 °C bis 125 °C aufweist, gemessen gemäß ASTM E28-92.

6. Toner zur Entwicklung eines elektrostatischen Ladungsbildes nach einem der Ansprüche 1 bis 5 mit einem für die Ladung erforderlichen Stellmittel auf Harzbasis.

7. Ein Verfahren zur Herstellung eines Toners zur Entwicklung eines elektrostatischen Ladungsbildes nach einem der Ansprüche 1 bis 6 mit Schritten, wie die Herstellung durch Schmelzkneten der Komponenten des Toners und anschließendes Kühlen zur Verfestigung, gefolgt von Zerkleinerung und Unterteilung, sowie die Zugabe eines externen Additivs.

## Revendications

1. Toner pour le développement d'une image de charge électrostatique, comprenant :
une particule de toner et un additif externe, la particule de toner comprenant :
une résine liante contenant un résine de polyester cristalline, un colorant, et un agent de libération, la résine de polyester cristalline comprenant :
un acide dibasique alicyclique, un acide téréphtalique, et un acide isophtalique comme composants acides, et la résine de polyester cristalline étant contenue dans la particule de toner selon une proportion de 4 à 8 % en masse.

2. Toner pour le développement d'une image de charge électrostatique selon la revendication 1, dans lequel la résine de polyester cristalline présente une masse molaire moyenne en poids allant de 20 000 à 40 000 telle que calculée en effectuant une mesure par exemple par chromatographie par perméation de gel (GPC) et un point de fusion allant de 95 °C à 100 °C, tel que déterminé par analyse thermique au moyen d'un calorimètre à balayage différentiel.

3. Toner pour le développement d'une image de charge électrostatique selon la revendication 1 ou 2, dans lequel la résine de polyester cristalline comprend un diol aliphatique en C4 à C12 comme composant alcoolique.

4. Toner pour le développement d'une image de charge électrostatique selon l'une quelconque des revendications 1 à 3, dans lequel la résine de polyester cristalline comprend un acide cyclohexanedicarboxylique, un acide téréphtalique, et un acide isophtalique comme composants acides, et le 1,4-butanediol comme composant alcoolique.

5. Toner pour le développement d'une image de charge électrostatique selon l'une quelconque des revendications 1 à 4, dans lequel la résine liante comprend une résine de polyester non cristalline, la résine de polyester non cristalline présentant une masse molaire moyenne en poids allant de 4 000 à 150 000 telle que calculée en effectuant une mesure par exemple par chromatographie par perméation de gel (GPC) et un point de ramollissement allant de 90 °C à 125 °C, tel que mesuré conformément à l'ASTM E28-92.

6. Toner pour le développement d'une image de charge électrostatique selon l'une quelconque des revendications 1 à 5, comprenant en outre un agent d'ajustement de charge de type résine.

7. Procédé de fabrication d'un toner pour le développement d'une image de charge électrostatique selon l'une quelconque des revendications 1 à 6, comprenant les étapes de fabrication par malaxage à l'état fondu des composants du toner, puis refroidissement pour solidification, suivi d'une pulvérisation et d'une classification et de l'ajout d'un additif externe.
